# EUROPÄISCHE PATENTSCHRIFT

(11) **EP 4 238 779 B1**
(45) Veröffentlichungstag und Bekanntmachung des Hinweises auf die Patenterteilung: **05.06.2024**
(21) Anmeldenummer: 22211927.3
(22) Anmeldetag: 07.12.2022
(51) Int. Cl.: B60B 3/18, B08B 9/04, B60B 37/10, F16B 21/18

(54) **FAHRWAGEN FÜR DIE KANALROHRINSPEKTION UND/ODER -SANIERUNG**
TROLLEY FOR SEWER PIPE INSPECTION AND/OR RENOVATION
CHARIOT POUR L'INSPECTION ET/OU LA RÉHABILITATION DE CANALISATIONS

(30) Priorität: 10.02.2022 DE 102022103165
(43) Veröffentlichungstag der Anmeldung: 06.09.2023
(73) Patentinhaber: IBAK Robotics GmbH, 76448 Durmersheim (DE)
(72) Erfinder: Gratz, Tobias, 76474 Au am Rhein (DE)
(74) Vertreter: Lobemeier, Martin Landolf

(56) Entgegenhaltungen:
- EP-A1- 3 628 507
- DE-A1-102020 002 327
- DE-U1-202015 007 064

## Beschreibung

Die Erfindung betrifft einen Fahrwagen für die Kanalrohrinspektion und/oder -sanierung mit einem Fahrwagenchassis, einer Mehrzahl von am Fahrwagenchassis angeordneten Steckachsen und jeweils einem von einer Steckachse aufgenommenen, eine Achsaufnahme aufweisenden Rad.

Fahrwagen zur Befahrung von Rohrsystemen, insbesondere im Rahmen der Kanalrohrinspektion oder Kanalrohrsanierung, sind allgemein bekannt, z.B. aus der DE 20 2009 003 388 U1. Die bekannten Fahrwagen sind üblicherweise modular aufgebaut und weisen zum Befahren von Rohren unterschiedlicher Nennweiten eine an die jeweilige Nennweite des jeweiligen Rohrs angepasste Größe auf. Dabei ist es aufgrund des modularen Aufbaus - mitunter mittels nur eines einzigen Werkzeugs - möglich, einen Fahrwagen vorbestimmter Größe an den jeweiligen Einsatzzweck anzupassen, wobei die einzelnen Komponenten oftmals auch unabhängig von der Größe des Fahrwagens verwendbar sind. So lassen sich die bekannten Fahrwagen je nach Bedarf mit nur wenigen Handgriffen dem Einsatzzweck entsprechend ausrüsten und umbauen, wobei der Höhenverstellung und der Auswahl der Räder im Rahmen der rohrmittigen Befahrung eine besondere Bedeutung zukommt.

Die Dokumente DE 102020002327 A1 und DE 202015007064 U1 zeigen weitere Fahrwagen der genannten Art.

So werden Fahrwagen regelmäßig mit einer Mehrzahl von Radsätzen ausgeliefert, die sich nicht nur hinsichtlich des Raddurchmessers, sondern auch hinsichtlich deren Eignung zum Befahren von unterschiedlich griffigen/rauen Rohrmaterialien unterscheiden.

Um die bei der an den jeweiligen Einsatzzweck angepassten Einrichtung eines Fahrwagens anfallenden Rüst- bzw. Umrüstzeiten möglichst kurz zu halten, sind Radschnellwechselsysteme entwickelt worden, die einen einfachen und schnellen Austausch der Räder eines Fahrwagens ermöglichen sollen. Ein derartiges Schnellwechselsystem für Fahrwagenräder eines Kanalinspektions- und/oder Kanalreinigungswagens ist beispielsweise aus der EP 2 939 848 B1 bekannt.

Der Nachteil der bekannten Schnellwechselsysteme liegt allerdings in einem komplexen Aufbau, der in einem arbeitsaufwändigen Herstellungsverfahren realisiert werden muss und einerseits aufgrund seiner Komplexität ein gewisses Verständnis bei der Handhabung des Fahrwagens erfordert und andererseits aufgrund seiner Verschleißanfälligkeit und Schmutzanfälligkeit einen hohen Wartungsaufwand begründet.

Aufgabe der Erfindung ist es daher, ein Schnellwechselsystem für die Räder eines Fahrwagens für die Kanalrohrinspektion und/oder -sanierung zu schaffen, das einfach aufgebaut, schmutzunempfindlich, einfach und schnell handzuhaben und auch einfach zu warten ist.

Diese Aufgabe wird erfindungsgemäß durch den Fahrwagen mit den Merkmalen von Anspruch 1 gelöst. Die Unteransprüche geben vorteilhafte Ausgestaltungen der Erfindung wieder.

Der Erfindung liegt die Erkenntnis zugrunde, dass die Räder eines Fahrwagens aufgrund der gebogenen Form der Rohrsohle bei geeigneter Konstruktion der Fügestelle zwischen Rad und Steckachse stets auf die Steckachse gedrückt werden, sodass eine axiale Sicherung der Räder gegen eine unbeabsichtigte Demontage während des Fahrbetriebs nicht zwingend erforderlich ist. Solange nämlich außerzentrische Kräfte auf das Rad wirken, verbleibt das Rad aufgrund der selbsthemmenden Eigenschaften der Verbindung von Achse und Rad auf der Achse. Wird hingegen bei der Demontage eine zentrische Kraft aufgebracht kann das Rad demontiert werden.

Um die Räder beim Einbringen des Fahrwagens ins Rohr, Kippen des Fahrwagens auf die Seite innerhalb des Rohrs und anderer unvorhersehbarer technischer Hindernisse gegen ein ungewolltes Verschieben auf der Steckachse zu sichern, ist ein elastisches Element vorgesehen, das einen ein Ablaufen des Rads verhindernden Kraftschluss von Steckachse und Rad bewirkt. Die Drehmomentmitnahme des auf der Steckachse angeordneten Rads erfolgt durch einen Formschluss, der beispielsweise mit als Zylinderstifte oder gefräste Kontur ausgebildeten Verriegelungselementen erzeugt werden kann.

Erfindungsgemäß wird also ein Fahrwagen für die Kanalrohrinspektion und/oder -sanierung vorgeschlagen, der ein Fahrwagenchassis, eine Mehrzahl von am Fahrwagenchassis angeordnete Steckachsen und jeweils wenigstens ein auf einer Steckachse angeordnetes, eine Achsaufnahme aufweisendes Rad besitzt, wobei wenigstens eine Steckachse ein sich wenigstens teilweise um die Steckachse und sich über den Umfang der Steckachse hinaus erstreckendes, einen Kraftschluss von Steckachse und Rad bewirkendes elastisches Element aufweist. Als Steckachse wird vorliegend die die Drehbewegung eines Rads bewirkende Welle oder ein mit der Welle verbundener Achsadapter angesehen. Das elastische Element ist dabei insbesondere von einer am Umfang der Steckachse vorgesehenen Nut derart aufgenommen, dass das elastische Element gegen ein axiales Verschieben auf der Steckachse gesichert ist. Steckachse und Achsaufnahme sind im Wesentlichen komplementär zueinander ausgebildet. Es versteht sich, dass nicht nur eine Steckachse erfindungsgemäß ausgestaltet, sondern bevorzugt vorgesehen ist, dass alle am Fahrwagen angeordneten Steckachsen gemäß der Erfindung ausgebildet sind.

Das elastische Element ist bevorzugt als elastisches Ringelement ausgebildet, wobei das Ringelement als ein offener Ring oder als ein geschlossener Ring ausgestaltet sein kann. Jedenfalls ist das elastische Element bevorzugt ein Elastomer oder eine Metallfeder, wobei das elastische Element im Fall eines Elastomers besonders bevorzugt ein Dichtungselement, höchst bevorzugt ein O-Ring ist. Nach einer weiteren Alternative kann das elastische Element auch aus Kunststoff gefertigt sein.

Die Ausgestaltung als O-Ring ermöglicht eine einfache Installation und einen einfachen Austausch bei Verschleiß. Die Ausgestaltung als Metallfeder, insbesondere als elastisches Ringelement aus Edelstahl ist insbesondere bei Einsätzen unter dem Gesichtspunkt des Explosionsschutzes von Vorteil.

Weiter ist bevorzugt vorgesehen, dass die Achsaufnahme eine das elastische Element teilweise aufnehmende, einen Formschluss von Steckachse und Rad bewirkende Nut aufweist. Die in der Achsaufnahme innenliegende Nut zur teilweisen Aufnahme des elastischen Elements sorgt nicht nur für eine zusätzliche durch die Form vermittelte Verbindung zwischen Steckachse und Rad, sondern vermittelt dem Benutzer aufgrund der haptischen Eigenschaften eine ordnungsgemäße Befestigung des Rads auf der Steckachse.

Besonders bevorzugt ist vorgesehen, dass die Steckachse, die insbesondere als Achsadapter ausgebildet sein kann, in Längsrichtung zwei aufeinanderfolgende Abschnitte unterschiedlichen Durchmessers aufweist, wobei beide Abschnitte von der Achsaufnahme des Rads aufgenommen sind. Dabei weist die Steckachse zusätzlich zu dem vorgenannten elastischen Element, das an dem einen Abschnitt der Steckachse angeordnet ist, ein weiteres sich am anderen Abschnitt der Steckachse wenigstens teilweise um diesen Abschnitt und sich über den Umfang dieses Abschnitts hinaus erstreckendes, einen Kraftschluss von Steckachse und Rad bewirkendes elastisches Element auf. Die Achsaufnahme des Rads ist dabei komplementär zu den beiden Abschnitten ausgebildet und kann sowohl für das erste elastische Element als auch für das zweite elastische Element eine einen Formschluss bewirkende Nut aufweisen.

Für die Drehmomentübertragung von der Steckachse auf das Rad sind an der Steckachse und dem Rad jeweils stirnseitig angeordnete, miteinander kooperierende, ein Drehen des Rads auf der Steckachse verhindernde Verriegelungselemente vorgesehen. Diese Verriegelungselemente sind besonders bevorzugt rotationssymmetrisch angeordnet.

Schließlich ist vorgesehen, dass der Fahrwagen ein Kamerafahrwagen und/oder Sanierungsfahrwagen ist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Übersicht eines besonders bevorzugt ausgestalteten Fahrwagens in einem Rohr;
- Fig. 2: eine perspektivische Ansicht eines Radschnellwechselsystems eines besonders bevorzugt ausgestalteten Fahrwagens der Erfindung von vorn;
- Fig. 3: eine perspektivische Ansicht des Radschnellwechselsystems aus Fig. 2 von hinten;
- Fig. 4: eine geschnittene Ansicht durch das zuvor dargestellte Radschnellwechselsystem;
- Fig. 5: eine alternative Ausgestaltung eines bevorzugt ausgestalteten Radschnellwechselsystems; und
- Fig. 6: zwei besonders bevorzugte Ausführungsbeispiele von als Metallfedern ausgebildeten elastischen Elementen.

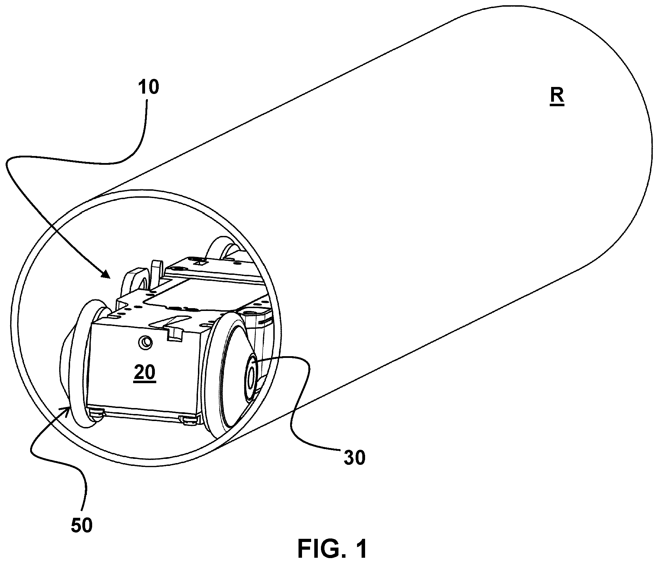

Fig. 1 zeigt einen in ein Rohr eingebrachten besonders bevorzugt ausgestalteten Fahrwagen für die Kanalrohrinspektion und/oder -sanierung. Der im Rohr R angeordnete Fahrwagen 10, der insbesondere als Kamerafahrwagen ausgebildet sein kann, besteht - wie bekannt - aus einem Fahrwagenchassis 20 mit einer Mehrzahl von am Fahrwagenchassis 20 angeordneten Steckachsen 30 und jeweils einem von einer Steckachse 30 aufgenommenen Rad 50.

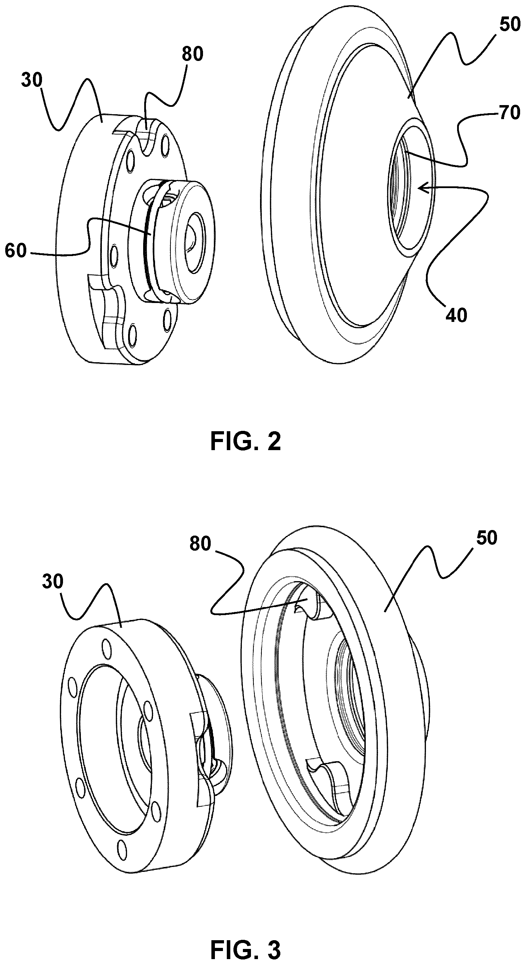

Die erfindungsgemäßen Besonderheiten ergeben sich aus den folgenden Abbildungen, von denen Fig. 2 eine perspektivische Ansicht eines Radschnellwechselsystems des in Fig. 1 dargestellten Fahrwagens 10 von vorn zeigt. Insbesondere zeigt Fig. 2 eine als Steckadapter ausgebildete Steckachse 30 und ein Rad 50, dessen Achsaufnahme 40 komplementär zur Steckachse ausgebildet ist. Es ist deutlich zu erkennen, dass die Steckachse 30 ein sich um die Steckachse 30 und sich über den Umfang der Steckachse 30 hinaus erstreckendes elastisches Element 60 in Form eines O-Rings aufweist, das einen Kraftschluss von Steckachse 30 und Rad 50 vermittelt. Der O-Ring 60 ist ein aus einem Elastomer gebildeter geschlossener Ring, der auch als Dichtungselement Verwendung findet und somit für den vorliegenden Zweck ohne weiteres verfügbar ist. Der O-Ring 60 ist in radialer Richtung teilweise von einer an der Steckachse vorgesehen Nut aufgenommen und ragt über den Umfang des vorderen Abschnitts der Steckachse 30 hinaus. Dabei ist ebenso ersichtlich, dass in der Achsaufnahme 40 des Rads 50 eine innenliegende Nut 70 vorgesehen ist, in die der O-Ring 60 beim Aufsetzen des Rads 50 auf die Steckachse 30 unter Ausbildung eines Formschlusses zwischen Steckachse 30 und Rad 50 eingesetzt werden kann.

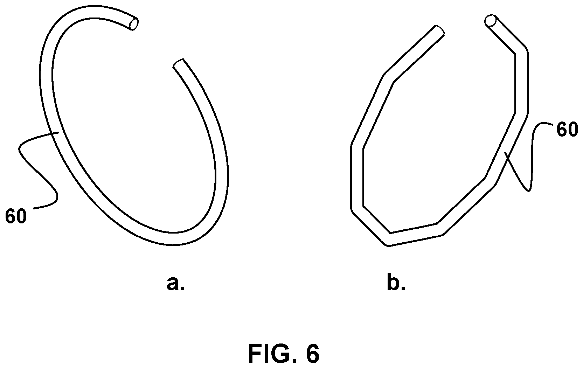

Alternativ zu einer Verwendung von als O-Ringen ausgebildeten Elastomeren kommen als elastische Elemente die in Fig. 6 dargestellten Metallfedern in Betracht, die insbesondere als rundgebogene (a) oder gekantete (b) offene Ringelemente ausgebildet sein können.

Fig. 3 zeigt eine perspektivische Ansicht des Radschnellwechselsystems aus Fig. 2 von hinten, wobei im Zusammenhang mit Fig. 2 die Verriegelungselemente 80 erkennbar sind, die jeweils stirnseitig an Steckachse 30 und Rad 50 angeordnet und komplementär zueinander ausgebildet sind, sodass bei Rad 50 und Steckachse 30 drehfest miteinander verbunden sind und das Drehmoment der Steckachse 30 auf das Rad 50 unmittelbar übertragen werden kann. Die Verriegelungselemente 80 sind dabei insbesondere rotationssymmetrisch angeordnet - vorliegend handelt es sich um drei Verriegelungselemente 80 die jeweils in einem Winkel von 120° versetzt zueinander angeordnet sind.

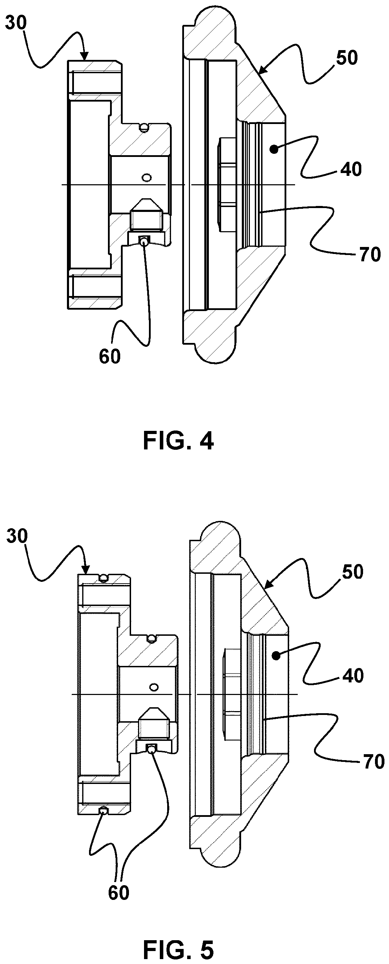

Fig. 4 zeigt eine geschnittene Ansicht durch das zuvor dargestellte Radschnellwechselsystem. In dieser Schnittansicht ist zu erkennen, dass die Steckachse 30 in Längsrichtung zwei aufeinanderfolgende Abschnitte unterschiedlichen Durchmessers aufweist, wobei das elastische Element nur an dem dem Rad 50 zugewandten Abschnitt mit geringem Durchmesser angeordnet ist. Insgesamt sind Steckachse 30 und die Achsaufnahme 40 des Rads 50 komplementär ausgebildet, sodass die Achsaufnahme 40 des Rads 50 den vorderen Abschnitt der Steckachse 30 vollständig aufnehmen kann, wobei das als O-Ring ausgebildete elastische Element 60 in die in der Achsaufnahme 40 vorgesehenen Nut 70 einrastet.

Fig. 5 zeigt eine alternative Ausgestaltung eines bevorzugt ausgebildeten Radschnellwechselsystems. Besonders bevorzugt ist vorgesehen, dass die Steckachse 30, die insbesondere als Achsadapter ausgebildet ist, in Längsrichtung zwei aufeinanderfolgende Abschnitte unterschiedlichen Durchmessers aufweist, wobei beide Abschnitte von der Achsaufnahme 40 des Rads 50 aufgenommen sind. Dabei weist die Steckachse 30 zusätzlich zu dem vorgenannten elastischen Element 60, das an dem einen Abschnitt der Steckachse 30 angeordnet ist, ein weiteres sich am anderen Abschnitt der Steckachse 30 wenigstens teilweise um diesen Abschnitt und sich über den Umfang dieses Abschnitts hinaus erstreckendes, einen Kraftschluss von Steckachse 30 und Rad 50 bewirkendes elastisches Element 60 auf. Die Achsaufnahme 40 des Rads 50 ist dabei komplementär zu den beiden Abschnitten ausgebildet und kann sowohl für das erste elastische Element 60 als auch für das zweite elastische Element 60 eine einen Formschluss bewirkende Nut 70 aufweisen.

## Patentansprüche

1. Fahrwagen (10) für die Kanalrohrinspektion und/oder -sanierung mit einem Fahrwagenchassis (20), einer Mehrzahl von am Fahrwagenchassis (20) angeordneten Steckachsen (30) und jeweils wenigstens einem auf einer Steckachse (30) angeordneten, eine Achsaufnahme (40) aufweisenden Rad (50),
**dadurch gekennzeichnet, dass**
wenigstens eine Steckachse (30) ein sich wenigstens teilweise um die Steckachse (30) und sich über den Umfang der Steckachse (30) hinaus erstreckendes, einen Kraftschluss von Steckachse (30) und Rad (50) bewirkendes elastisches Element (60) aufweist.

2. Fahrwagen (10) nach Anspruch 1, **dadurch gekennzeichnet, dass** das elastische Element (60) ein als offener Ring oder als geschlossener Ring ausgebildetes elastisches Ringelement ist.

3. Fahrwagen (10) nach einem der vorhergehenden Ansprüche, **dadurch gekennzeichnet, dass** das elastische Element (60) ein Elastomer oder eine Metallfeder ist.

4. Fahrwagen (10) nach Anspruch 3, **dadurch gekennzeichnet, dass** das Elastomer ein Dichtungselement ist.

5. Fahrwagen (10) nach Anspruch 4, **dadurch gekennzeichnet, dass** das Dichtungselement ein O-Ring ist.

6. Fahrwagen (10) nach einem der vorhergehenden Ansprüche, **dadurch gekennzeichnet, dass** die Achsaufnahme (40) eine das elastische Element (60) teilweise aufnehmende, einen Formschluss von Steckachse (30) und Rad (50) bewirkende Nut (70) aufweist.

7. Fahrwagen (10) nach einem der vorhergehenden Ansprüche, **dadurch gekennzeichnet, dass** die Steckachse (30) und das Rad (50) jeweils mindestens ein stirnseitig angeordnetes Verriegelungselement (80) aufweisen, wobei die Verriegelungselemente von Steckachse und Rad miteinander kooperieren und damit ein Drehen des Rads auf der Steckachse verhindern.

8. Fahrwagen (10) nach Anspruch 7, **dadurch gekennzeichnet, dass** die Verriegelungselemente (80) rotationssymmetrisch angeordnet sind.

9. Fahrwagen (10) nach einem der vorhergehenden Ansprüche, **dadurch gekennzeichnet, dass** der Fahrwagen (10) ein Kamerafahrwagen oder Sanierungsfahrwagen ist.

## Claims

1. Trolley (10) for sewer pipe inspection and/or renovation with a trolley chassis (20), a plurality of quick release axles (30) arranged on the trolley chassis (20) and in each case at least one wheel (50) arranged on a quick release axle (30) and having an axle mount (40),
**characterized in that**
at least one quick release axle (30) has an elastic element (60) extending at least partially around the quick release axle (30) and beyond the circumference of the quick release axle (30) and effecting a force fit between the quick release axle (30) and the wheel (50).

2. Trolley (10) according to claim 1, **characterised in that** the elastic element (60) is an elastic ring element designed as an open ring or as a closed ring.

3. Trolley (10) according to one of the preceding claims, **characterised in that** the elastic element (60) is an elastomer or a metal spring.

4. Trolley (10) according to claim 3, **characterised in that** the elastomer is a sealing element.

5. Trolley (10) according to claim 4, **characterised in that** the sealing element is an O-ring.

6. Trolley (10) according to one of the preceding claims, **characterised in that** the axle receptacle (40) has a groove (70) which partially receives the elastic element (60) and brings about a positive fit between the quick release axle (30) and the wheel (50).

7. Trolley (10) according to one of the preceding claims, **characterised in that** the quick release axle (30) and the wheel (50) each have at least one locking element (80) arranged on the front-end, the locking elements of the quick release axle and wheel cooperating with one another and thus preventing the wheel from rotating on the quick release axle.

8. Trolley (10) according to claim 7, **characterised in that** the locking elements (80) are arranged rotationally symmetrical.

9. Trolley (10) according to one of the preceding claims, **characterised in that** the trolley (10) is a camera trolley or refurbishment trolley.

## Revendications

1. Chariot (10) destiné à l'inspection et/ou la rénovation de canalisations, comportant un châssis de chariot (20), une pluralité d'axes de transmission (30) disposés sur le châssis de chariot (20), et respectivement au moins une roue (50) disposée sur un axe de transmission (30) et présentant un logement d'axe (40), **caractérisé en ce que** au moins un axe de transmission (30) présente un élément élastique (60) s'étendant au moins partiellement autour de l'axe de transmission (30) et s'étendant au-delà de la circonférence de l'axe de transmission (30), et assurant une adhérence entre l'axe de transmission (30) et la roue (50).

2. Chariot (10) selon la revendication 1, **caractérisé en ce que** l'élément élastique (60) est un élément annulaire élastique réalisé sous la forme d'un anneau ouvert ou d'un anneau fermé.

3. Chariot (10) selon l'une des revendications précédentes, **caractérisé en ce que** l'élément élastique (60) est un élastomère ou un ressort métallique.

4. Chariot (10) selon la revendication 3, **caractérisé en ce que** l'élastomère est un élément d'étanchéité.

5. Chariot (10) selon la revendication 4, **caractérisé en ce que** l'élément d'étanchéité est un anneau torique.

6. Chariot (10) selon l'une des revendications précédentes, **caractérisé en ce que** le logement d'axe (40) présente une rainure (70) recevant partiellement l'élément élastique (60) et assurant une liaison de forme entre l'axe de transmission (30) et la roue (50).

7. Chariot (10) selon l'une des revendications précédentes, **caractérisé en ce que** l'axe de transmission (30) et la roue (50) présentent respectivement au moins un élément de verrouillage (80) disposé du côté frontal, les éléments de verrouillage de l'axe de transmission et de la roue coopérant entre eux et empêchant ainsi une rotation de la roue sur l'axe de transmission.

8. Chariot (10) selon la revendication 7, **caractérisé en ce que** les éléments de verrouillage (80) sont disposés en symétrie de rotation.

9. Chariot (10) selon l'une des revendications précédentes, **caractérisé en ce que** le chariot (10) est un chariot de caméra ou un chariot servant à la rénovation.
